# EUROPEAN PATENT SPECIFICATION

(11) **EP 2 331 269 B1**
(45) Date of publication and mention of the grant of the patent: **19.06.2013**
(21) Application number: 09784648.9
(22) Date of filing: 07.07.2009
(51) Int. Cl.: B08B 7/00, F26B 11/02, B09B 3/00

(54) **MULTI-HEAT ZONE GASIFIER**
VERGASUNGSAPPARAT MIT MEHRERE ERWÄRMUNGSZONEN
GAZÉIFICATEUR À ZONES DE CHALEUR MULTIPLES

(30) Priority: 11.07.2008 GB 0812683
(43) Date of publication of application: 15.06.2011
(73) Proprietor: Chalabi, Rifat A., Nottingham NG1 1HS (GB); Perry, Ophneil Henry, Nottingham, NG7 1FL (GB)
(72) Inventor: Chalabi, Rifat A., Nottingham NG1 1HS (GB); Perry, Ophneil Henry, Nottingham, NG7 1FL (GB)
(74) Representative: Bhimani, Alan
(86) International application number: PCT/GB2009/001683
(87) International publication number: WO 2010/004268

(56) References cited:
- DE-B- 1 024 059
- FR-A- 964 620
- GB-A- 382 006
- GB-A- 2 189 874
- US-A- 2 709 306
- US-A- 2 816 371

## Description

### Field of the Invention

The present invention relates to an apparatus for processing waste material including organic waste and municipal solid waste (MSW).

### Background of the Invention

There is an increasing requirement to recycle materials such as aluminium, magnesium and other metals and non-metals. Often such materials will be coated in paint, oil, water, lacquers, plastics, or other volatile organic compounds (V.O.C.s) which must be removed prior to re-melting the materials. For materials which are capable of being processed at relatively high temperatures without melting, such impurities are typically removed using a thermal process which is sometimes known as de-coating. Such thermal de-coating processes can also be used to dry and/or sterilize materials prior to remelting.

For example, aluminium is often used in the production of beverage cans which are typically coated in paint, lacquers and/or other V.O.C.s, and also in larger products such as internal combustion engine blocks. Before the aluminium can be melted down for recycling, any coatings or other impurities must be removed in order to minimize metal loss and the aluminium separated from other metals.

Known de-coating processes involve exposing the material to be treated to hot gases in order to oxidise the coatings and/or impurities which are to be removed. This exposure takes place in a closed environment in which the temperature and oxygen content of the hot gases can be controlled. Temperatures in excess of 300 C are required to remove most organic compounds and an oxygen level in the range of 6% to 12% is normally required.

If the temperature and oxygen levels of the hot gases are not carefully controlled the process can go autothermic as the V.O.C.s which are released during the thermal stripping are combusted. This can result in an uncontrolled increase in the temperature of the hot gases which may be very dangerous.

The material will usually be shredded before treatment and it is important for effective de-coating that all the surfaces of the shredded material are exposed to the hot gases. If this does not occur then the treatment becomes less effective and, in the case of U.B.C.s in particular, a black stain may be left on the surface of the treated material. It is also desirable for the material to be agitated during the treatment to physically remove lose coatings or impurities from the material.

At present the main systems which are used for thermal de-coating and metal recovery are:

### 1 Static Oven

In a static oven, the material is stacked on a wire mesh and hot gases are recirculated through the oven to heat the material to the required process temperature.

This arrangement is not efficient because the hot gases do not come in to contact with the materials that are enclosed within the stack of materials on the mesh. As discussed previously, it is important in de-coating that all the surfaces of the materials being treated are exposed to the hot gases. Also there is no agitation of the material being treated.

### 2 Conveying Oven

This system uses a mesh belt conveyor to transport materials for treatment through an oven. Hot gasses are passed through the material on the belt as it passes through the oven. The problems with this method are as follows:
The depth of materials on the belt limits the process. The materials are stacked, causing similar problems to those found with the static oven in which materials at the centre of the stack do not come into contact with the hot gases
There is no agitation of the materials, so loose coatings are not removed.
The conveyor belt life is short.
The materials have to be constantly fed.
The process is not suitable for low volume or continuously changing product.

### 3 Rotating Kiln

A large kiln is inclined to the horizontal so that material fed or charged into the kiln at its highest end travels towards the lowest end, where it is discharged, under the influence of gravity. The kiln is rotated so that material within the kiln is agitated and a flow of hot gases is provided to heat up the material as it travels through the kiln. A number of problems are associated with this method:
The material has to be constantly fed.
The process is not suitable for low volume or continuously changing product.
The continuous process requires air locks at both ends, materials charge end and materials discharge end.

The kiln requires a rotating seal leading to a high level of maintenance.

### 4 Sloping Hearth Furnace

This is used for reclaiming metal such as aluminium from engine blocks and the like. A dross furnace is provided with one or more tap holes or a full width slot so sized as to permit the passage of molten metal into a reservoir while retaining the resulting waste material. The dross furnace has a sloping hearth on which the engine blocks are loaded and the resulting molten aluminium drains into the reservoir. The angle of the sloping hearth is critical and dust and sand from the engine blocks can contaminate the metal.

WO 01/98092 A1 describes a pivotable or tiltable oven that overcomes many of the disadvantages of the previously known apparatus and methods for thermal de-coating. For a detailed description of the construction and operation of the oven, the reader should refer to WO 01/98092 A1. However, briefly, the oven has a charging portion for receiving material to be treated and a changeover portion. Incorporated within the changeover portion is a heat treatment chamber through which a stream or flow of hot gasses can be passed. The oven is pivotally moveable between a first position in which the changeover portion is higher than the charging portion and a second position in which the charging portion is higher than the changeover portion. The arrangement is such that the oven can be repeatedly moved between the first and second positions so that material within the oven falls from one portion to the other portion, passing through the stream of hot gasses in the heat treatment chamber. A method of using the apparatus is also disclosed.

The above known oven has the advantage that it can be used to treat comparatively low volumes of material in a batch process. A further advantage is that by controlling the movement of the oven, the material being treated can be brought into and out of the heat treatment chamber at will, enabling the oven to be operated safely without the process going autothermic in an uncontrolled manner and allowing a very fine degree of control of the treatment process.

The oven described in WO 01/98092 A1 has been found to work well, providing a commercially and technically acceptable means of thermally de-coating relatively low volumes of materials. However, when treating light weight materials, such as powders or materials that have been shredded into very small pieces, there can be a tendency for some of the material being treated to become entrained in the flow of hot gasses passing through the heat treatment chamber. Whilst some of the entrained material can be filtered out of the gas flow and recollected, there is an overall reduction in the efficiency of the process.

US patent 2,709,306 discloses an apparatus for treating a pulverised material that has a processing chamber having a processing zone for processing waste at an elevated temperature. The processing chamber has an inlet for introducing the waste material and an outlet for removal of processed solids. A means for introducing hot gasses into the chamber and extraction means for extracting gas from the chamber. The inlet and outlet are both offset relative to a central axis of the oven.

### Summary of the Invention

The present invention seeks to provide an improved apparatus for processing waste material.

Accordingly, the present invention provides an apparatus for processing waste material including organic waste and MSW comprising: an elongate processing chamber having a processing zone for processing waste at an elevated temperature; wherein the processing chamber has: an inlet for introducing said waste material; an outlet for removal of processed solids; first means for introducing hot gasses into said chamber at a radially outer region of said chamber; and extraction means for extracting gas from a central region of said chamber, characterised in that said processing chamber has a first zone for extracting air and/or moisture from said waste and a second zone downstream of said first zone for extraction of syngas; and that the extraction means is adapted to extract said air and/or moisture separately from said syngas.

Various optional features of preferred embodiments of the apparatus of the invention are set out in each of the paragraphs below.

Said first means comprises at least one array of nozzles arranged longitudinally of said chamber.

Said nozzles are formed in a part cylindrical array in said chamber.
and may be angularly movable about the longitudinal axis of said chamber thereby to enable said array to be positioned at any preferred angular position within said chamber.

Said nozzles are formed in an array of pipes extending along said chamber.

At least some of said pipes are rotatable about their longitudinal axes and have means for breaking up said waste.

The apparatus may have means movable within said chamber for breaking up said waste.

Said extraction means extends longitudinally of said chamber for extracting said gas along at least a portion of the length of said chamber.

Said extraction means comprises an elongate pipe having a plurality of openings for passage of said gas into said pipe.

Said chamber has gate means movable between a first position for inhibiting movement of waste from said first zone into said second zone, and a second position allowing free movement of said waste from said first zone into said second zone.

The apparatus may have pipe means extending coaxially of said chamber and having a plurality of through-holes for passage of said gas into said pipe means.

Said pipe means has: first conduit means extending along said first zone and having a plurality of said through-holes arranged for extraction of said air and/or moisture along said first zone; and second conduit means extending along said second zone and having a plurality of said through-holes arranged for extraction of said syngas along said second zone.

Said through-holes are arranged for uniform extraction of said air and/or moisture along said first zone and said syngas along said second zone.

The apparatus may have an extraction zone downstream of said processing zone for extraction of processed solids from said processing zone.

Said apparatus has gate means movable between a first position for inhibiting movement of waste from said processing zone into said extraction zone, and a second position allowing free movement of said waste from said processing zone into said extraction zone.

Said extraction zone comprises a receptacle having a plurality of through-holes for allowing extraction of dust and small particulate material from said extraction zone.

Said extraction means further comprises assist means for conducting a portion of said extracted gases into said extraction zone for assisting extraction of said dust and small particulate material from said extraction zone.

Said assist means comprises an elongate pipe having a plurality of openings for passage of said gas into said extraction zone.

The present invention further provides a method of processing waste material including organic waste and MSW comprising: introducing said waste material into a processing zone; introducing hot gasses into said zone at a radially outer region of said zone; removing processed solids from said zone; and extracting gas from a central region of said zone; characterised in that: said processing zone has a first zone for extracting air and/or moisture from said waste and a second zone downstream of said first zone for extraction of syngas; and the method further comprises extracting said air and/or moisture separately from said syngas.

Various optional features of preferred embodiments of the method of the invention are set out in each of the paragraphs below.

Said hot gasses are introduced into said zone through at least one array of nozzles arranged longitudinally of said zone.

Said nozzles are formed in a part cylindrical array in said zone, and said array is angularly moved about the longitudinal axis of said zone thereby to enable said array to be positioned at any preferred angular position within said zone.

Said nozzles are formed in an array of pipes extending along said zone.

At least some of said pipes are rotated about their longitudinal axes.

Said gas is extracted along at least a portion of the length of said zone.

Movement of waste from said first zone into said second zone occurs in a controlled manner.

The present invention is further described hereinafter, by way of example, with reference to the accompanying drawings, in which:

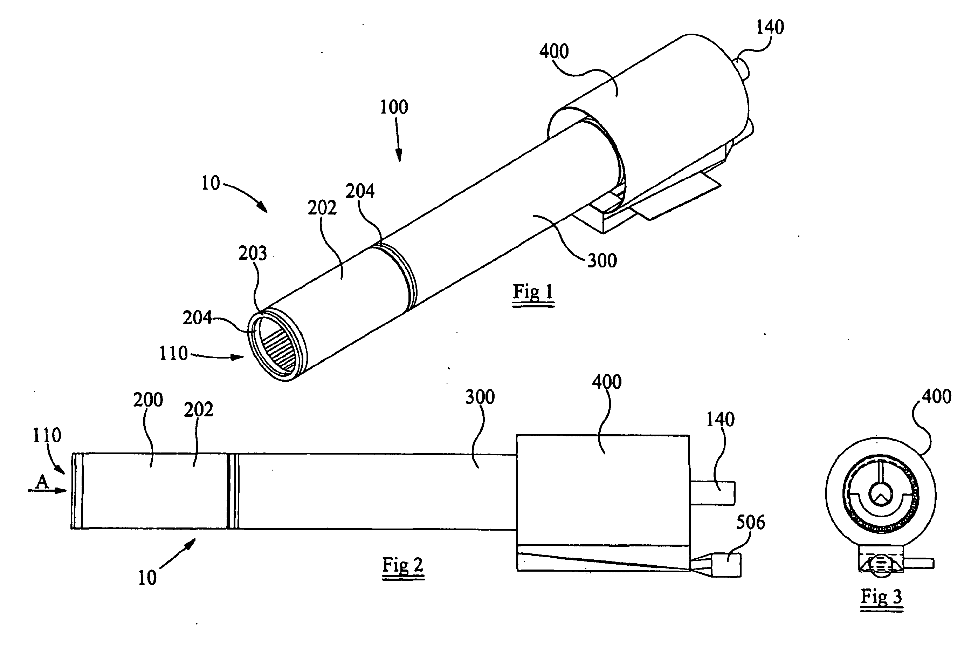

Figure 1 is a perspective view from above of a preferred form of apparatus according to the present invention;
Figure 2 is a side elevation of the apparatus of Figure 1;
Figure 3 is an end elevation in the direction of Arrow A of Figure 2;
Figure 4 is a view similar to that of Figure 1 but with the outer walls of the apparatus rendered transparent to show the interior;

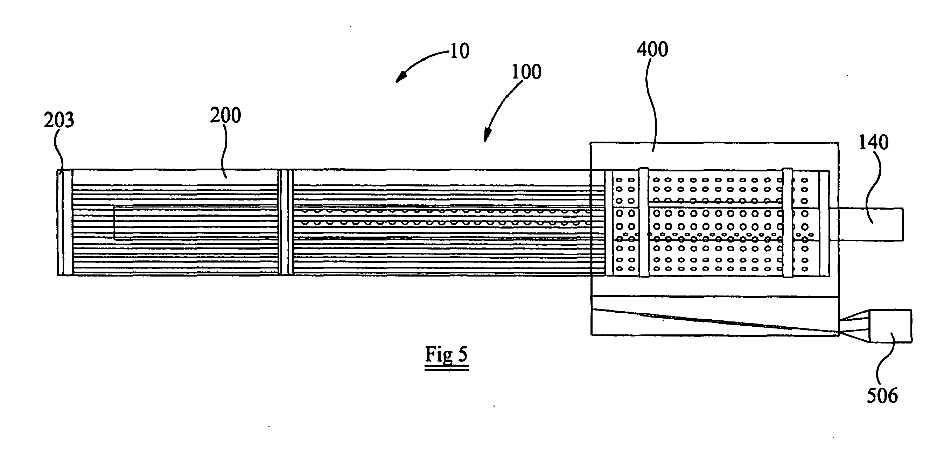

Figure 5 is a view similar to that of Figure 2 showing the interior of the apparatus;
- Figure 6 is a view similar to that of Figure 4 of a longitudinal section through the apparatus of Figure 1;
Figure 7 is a side elevation, partly in section, of an extraction pipe of the apparatus of Figure 1;
Figure 8 is an end elevation of the pipe of Figure 7 in the direction of Arrow B;
Figure 9 is an enlarged longitudinal sectional view of the right hand end of the pipe of Figure 7;
Figure 10 is an enlarged longitudinal sectional view of the pipe of Figure 7 at point D;
Figure 11 is an enlarged longitudinal sectional view of the pipe of Figure 7 at point C;

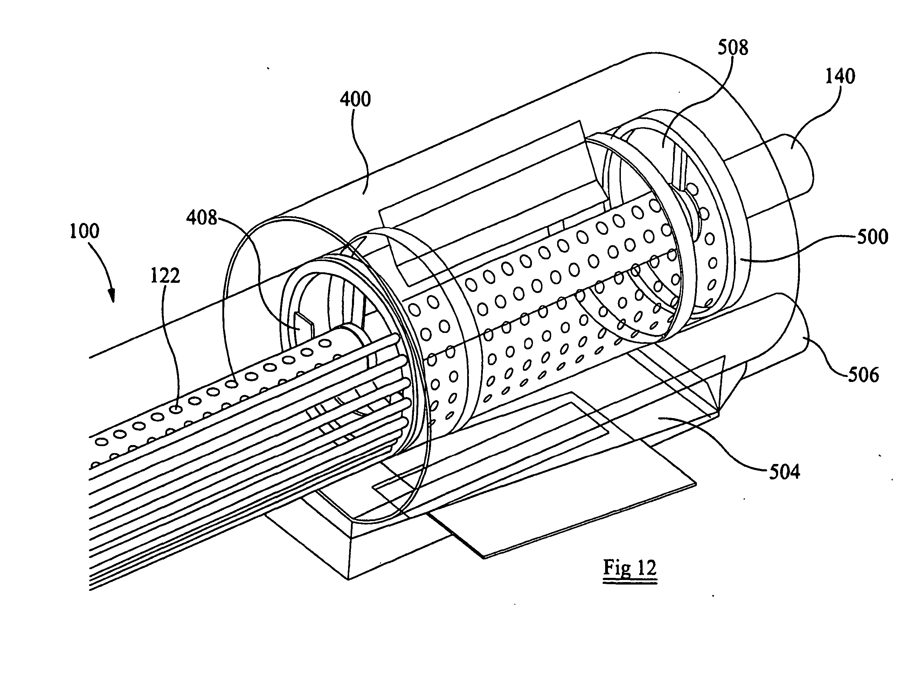

Figure 12 is a view similar to that of Figure 6 showing an extraction chamber of the apparatus;

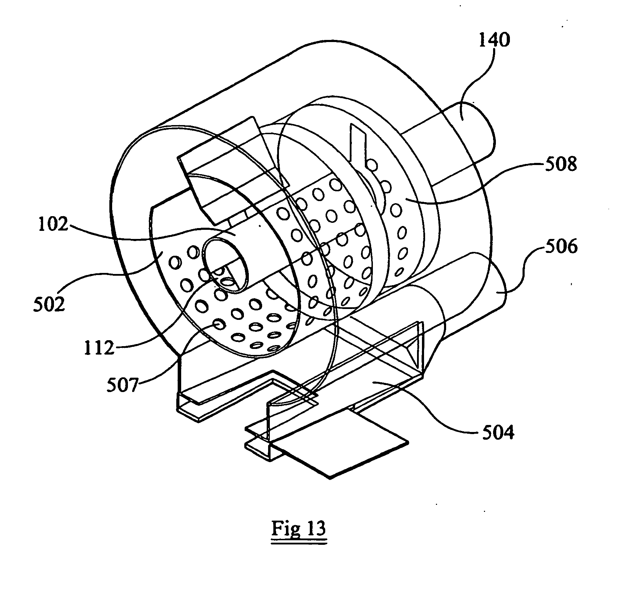

Figure 13 is a view similar to that of Figure 12, of a section of the extraction chamber;

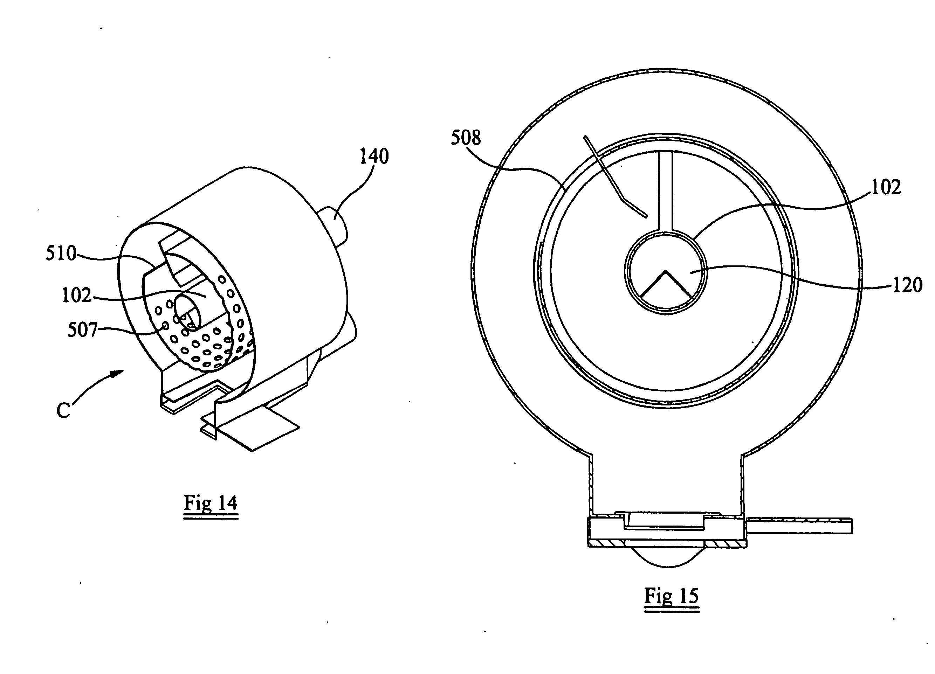

Figure 14 is a solid view, similar to that of Figure 13, of the extraction chamber; and
Figure 15 is a view in the direction of Arrow C of Figure 14.

Referring to the drawings, these show a preferred form of apparatus 10 for processing a wide variety of liquidly organic material, MSW or coal independent of its water content or organic content. The apparatus is used to gasify waste and generate synthetic gas (syngas) which is collected rather than burnt.

The apparatus comprises an elongate processing chamber 100 which is generally cylindrical in shape (although any suitable shape may be used) and has a processing zone consisting of a first zone 200 in which moisture and air are removed from the waste material, and a second zone 300, downstream of the first zone 200, which extracts syngas. An extraction chamber 400 is provided downstream of the second zone 300 and provides a further extraction zone 500 for extracting solid material in the form of dust, particulates and large sized non-organic inclusions (for example metal, glass or bricks).

Referring firstly to the processing chamber 100, this has an inlet 110 for the introduction of waste material and is in effect formed by two separate receptacles which form the first and second zones 200, 300. The two zones are preferably substantially identical and therefore only zone 200 is described in detail.

Zone 200 is cylindrical in shape, although it will be appreciated that any suitable cross-sectional shape may be used, such as square, hexagonal or other polygonal shape. In the illustrated embodiment zone 200 has a cylindrical outer wall 202 and a circular supporting flange 203 mounted at each end of the wall 202..Additional or alternative supports may be provided.

The zone 200 also has circular supports 204 mounted to the flanges 203 at each end of the wall 202 for rotation about the longitudinal axis of the processing chamber relative to the wall and flanges 202, 203. The supports 204 carry an array of tubes or pipes which extend generally co-axial with the processing chamber and are close to but spaced from the cylindrical wall 202 of the first zone 200.

The pipes 206 have an array of nozzles 210 or through-holes through which hot gases are pumped into the first zone 200. The supports 204 feed the hot gases to the pipes 206 and the nozzles are arranged along the lengths of the pipes 206 to allow the hot gases to be pumped into the first zone 200 along the length of the zone. Ideally, the arrangement is such that the hot gases can be pumped in uniformly along the length of the first zone 200.

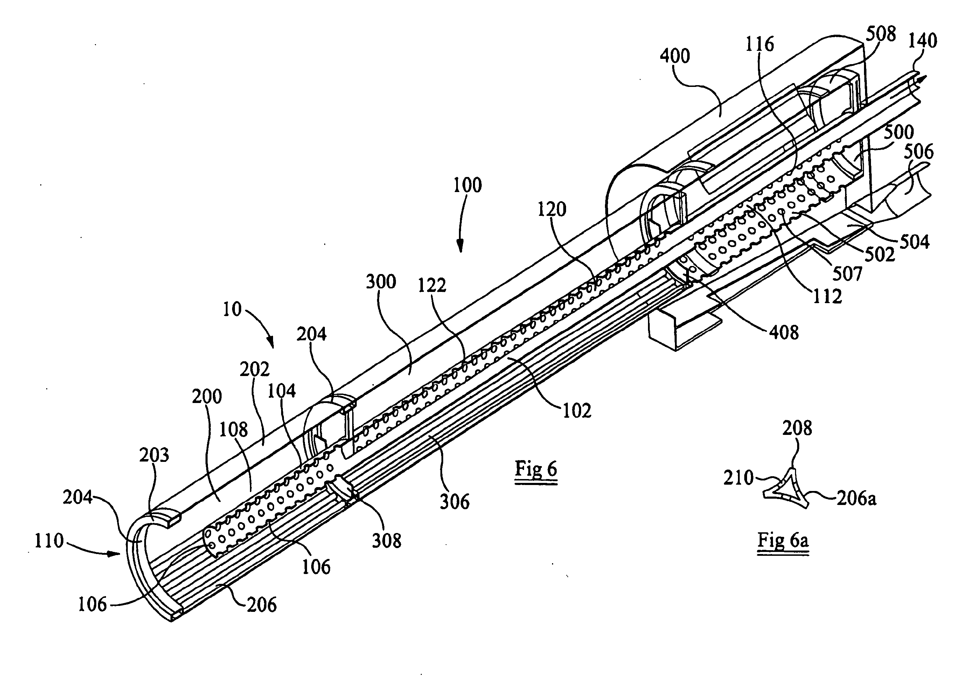

Each of the pipes 206 is also rotatable about its axis independently or in conjunction with one or more of the other pipes and whilst the pipes 206 shown in Figure 6 are cylindrical they may have a variety of cross-sectional shapes such as the shape shown in Figure 6a. The pipe 206a shown in Figure 6a is generally triangular in cross section having three sharp corners 208 and the nozzles 210 through which the hot gases are ejected into the first zone 200.

During rotation of the pipes (the pipes may be rotated at variable speeds) the sharp edges 208 serve to help in breaking up the waste material in the first zone. Alternatively or additionally, the pipes 206, 206a can carry suitable means such as suitably shaped protrusions which serve the same purpose, i.e. to break up the solids in the waste.

The rotation of the pipes also serves to stir and crush the waste solids.

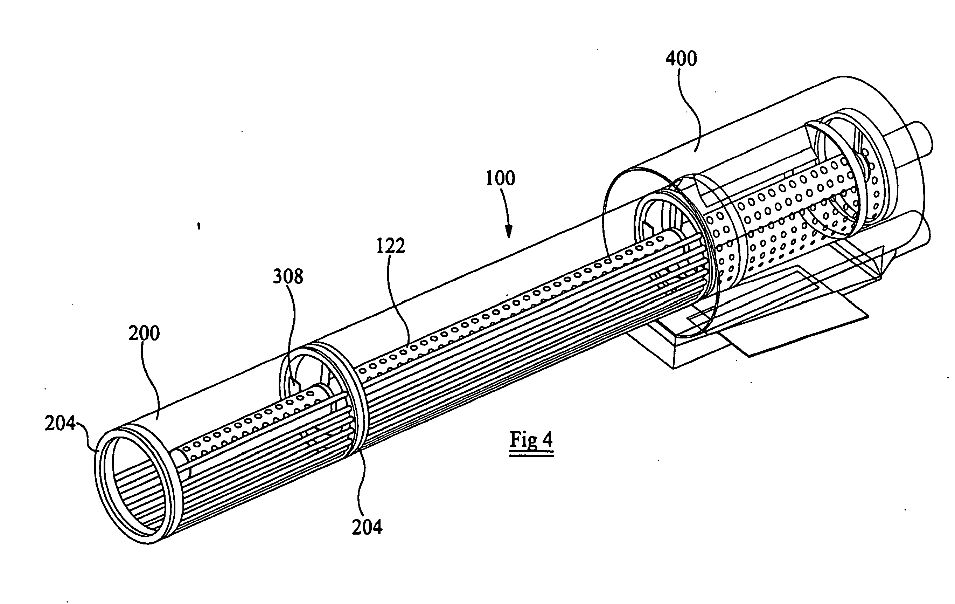

As can be seen from Figure 4, the array of pipes 206 extends through a preselected angle which here does not extend to a full 360 degrees. In Figure 4, the pipes are shown as extending in an array through an angle of about 180 degrees although this angle can be varied by addition or removal of pipes to suit particular processes.

The effect of this arrangement is to provide for a heated zone where the pipes 206 are located and an unheated zone where there are no pipes. The advantages of this will be described later.

The second zone 300 co-axially abuts the first zone and operates in a similar manner to the first zone 200. Zone 300 is provided with a similar array of pipes 306 to that shown and described with regard to the first zone 200. A gate 308 preferably in the form of an arcuate segment is provided between the two zones and can be rotated about the axis of the processing chamber between a position as shown in Figure 4 where it inhibits movement of solid waste material from the first zone 200 into the second zone 300, and a position 180 degrees removed where it allows free movement of the waste material into the second zone 300.

The extraction chamber 400 co-axially abuts the second zone 300 and is also provided with a gate 408 which acts in a similar manner and is controlled in a similar manner to gate 308.

The extraction chamber 400 has an outer housing 501 which is generally floor mounted, and an inner preferably cylindrical receptacle 502 which forms the extraction zone 500. The zones 200, 300 and 500 may be rotatable relative to one another. This is effected by way of the supporting flanges 203 at each end of the walls 202, 302, 508.. The receptacle 502 is rotatable within the housing 501. As can best be seen in Figure 6, the cylindrical wall 508 of the receptacle 502 is perforated with through-holes 507 of a size sufficient to allow dust and small particulate material to fall through into a dust extraction portion 504 of the extraction chamber 400. The dust extraction portion 504 can be a simple chute which may be inclined downwardly in a downstream direction to assist extraction. This material is extracted from the portion 504 with the aid of the hot gases introduced into the first zone as is described later. The material is drawn through the portion 504 and through an outlet duct 506 for further processing.

Extraction of the air and moisture from the first zone 200 and syngas from the second zone 300 is effected by way of suitable extraction means preferably in the form of an extraction pipe 102. As can best be seen in Figures 6 to 11, the extraction pipe 102 extends from an outlet 140 through the third and second zones 500, 300 and into the first zone 200 conveniently to a position almost at or adjacent to the inlet 110. The extraction pipe is conveniently co-axial with the first and second zones 200, 300 and the extraction zone 500 to enable the air, moisture and syngas to be extracted from the centre of the processing chamber100, although any suitable positioning may be used.

The extraction pipe 102 has a first conduit 104 which extends the length of the extraction pipe from the first zone 200 to the outlet 140. The conduit 104 is provided with a first array 106 of through-holes in an end portion 108 which lies in the first zone 200 and a second array 116 in a further portion 112 which lies in the extraction zone 500. This allows the air and moisture in the first zone 200 to be extracted and drawn out either through the outlet 140 of the extraction pipe 102 or through the extraction zone 500 and the outlet 506. In the latter case the smaller dust and particulate material passing from the second zone 300 into the extraction zone 500, is carried out though the outlet 506 by the flow of gases from the first zone 200.

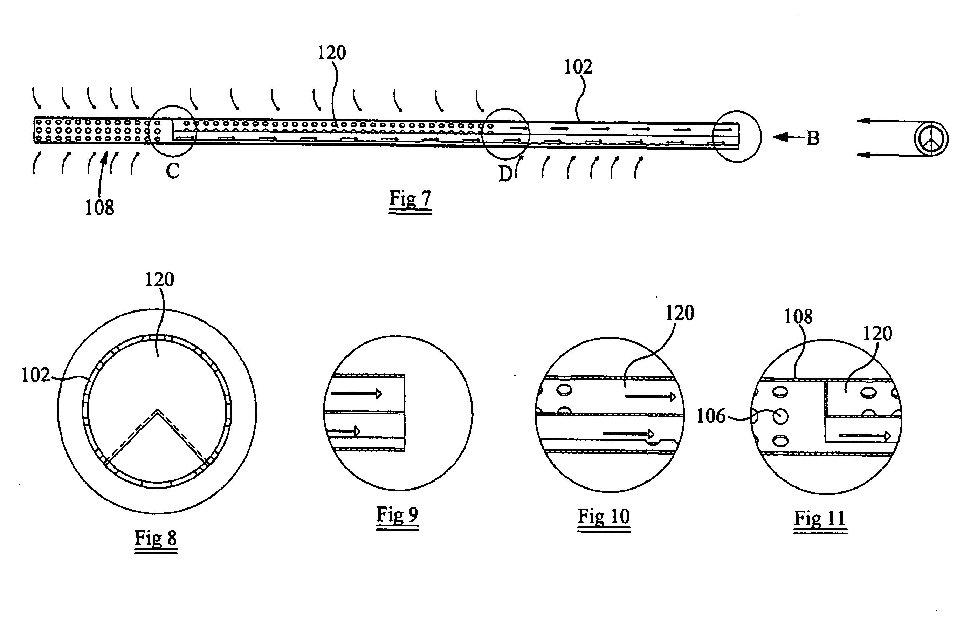

The extraction pipe 102 also has a second conduit 120 which is formed as a segment of the extraction pipe 102 (see Figures 7 to 11) but is sealed from the first conduit 104 so that gases cannot pass directly from one to the other. The second conduit 120 also has an array 122 of through-holes along its length within the second zone 300 and these through-holes allow the extraction of syngas from the second zone 300. The syngas is conducted through the conduit 120 and the outlet 140 to a storage or further processing area without coming into contact with the air which is extracted through the first conduit 104. This has a significant advantage in that it greatly reduces the risks of fire and explosion that can result from entrainment of air into zones which contain a volatile, high fuel concentration.

Although the conduits 104, 120 are shown as being interconnected it will be appreciated that any suitable means which enables separate extraction of the air and moisture in the first zone 200 and the extraction of syngas from the second zone 300 may be used. Two separate pipes or conduits may be used, one for each zone.

The extraction is effected at a relatively low velocity and this is achieved not by reducing the volumetric flow but by having relatively large diameter through-holes. This means that whilst the fluid velocity is low the flow rate is quite high, resulting in effective and fast processing of the waste material.

Turning again to the extraction chamber 400, as can be seen from the drawings the through-holes 507 formed in the wall 508 extend over an angular distance of less than 360 degrees and typically about 180 degrees. In the wall 508 opposite the through-holes there is a large opening 510 through which the larger solid material can be extracted. To effect this, the receptacle 502 is rotated to bring the opening 508 to its lowest point and allow the heavier, large scale waste to fall through into a removable bin (not shown in the drawings).

Since the gas and moisture from the first zone 200 is normally drawn through the receptacle 502 and out through the outlet 507, the pump or other suction means normally used to draw the gas through, can be switched off to reduce the possibility of the gas escaping through the opening 510.

### Operation

In use, waste material is introduced through the inlet 110 in to the first zone 200. The pipes 206 can be rotated at varying speeds independently of one another about their longitudinal axes to crush, stir and break up the waste material. The array of pipes 106 can also be reciprocated or rotated about the longitudinal axis of the first zone 200 to aid this process.

At the same time, hot gases are introduced into zone 200 through the pipes 106 and nozzles 210 and are extracted from zone 200 through the through-holes 106 in the extraction pipe 102, together with the air and moisture which is entrained in the waste material. Because the hot gases pass from the radially outer region of the first zone 200 towards the centre where they are extracted, gas collection within the zone is relatively uniform and greatly enhances the exposure of the waste material to the hot gases. This increases the reaction of the hot gases with the material and improves the efficiency of the process.

When the array of pipes 206 extends angularly only over a part of the circumference of the first zone 200, this creates a heated or high temperature zone extending about that part of the circumference of the first zone 200 where the pipes are located and a non-heated or lower temperature zone extending about the circumference of the first zone 200 where there are no pipes 206. This means that, should the temperature within the waste material in zone 200 rise above a preselected level, the array of pipes 206 can be rotated away from the bulk of the material such that the high temperature zone created by the pipes is moved remote from the material, allowing the material to cool.

Once sufficient material in zone 200 has been effectively processed, the gate 308 can be rotated out of its "stop" position shown in Figure 4 to allow the waste material to move into the second zone 300, where it is processed in a similar manner to the waste material in zone 200.

The gate 408 is similarly opened to allow material to be transferred to the extraction zone 400.

Because the gases are extracted separately from the first and second zones 200, 300 neither zone is contaminated by conditions within the other zone. In addition, although the waste material is continually fed through the inlet 110 it is retained independently in each zone for separate processing and only released by the gates when the required conditioning or processing has been effected.

The arrangement of the zones also reduces the possibility of air entrainment problems which are associated with conventional kilns.

## Claims

1. An apparatus (10) for processing waste material including organic waste and MSW comprising:
an elongate processing chamber (100) having a processing zone (200, 300) for processing waste at an elevated temperature;
wherein the processing chamber (100) has:
an inlet (110) for introducing said waste material;
an outlet (504) for removal of processed solids;
first means (206, 306) for introducing hot gasses into said chamber (100) at a radially outer region of said chamber;
and extraction means (102) for extracting gas from a central region of said chamber (100); **characterised in that**
said processing chamber (100) has a first zone (200) for extracting air and/or moisture from said waste and a second zone (300) downstream of said first zone for extraction of syngas; and that
the extraction means (102) is adapted to extract said air and/or moisture separately from said syngas.

2. An apparatus as claimed in claim 1 wherein said first means comprises at least one array of nozzles (210) arranged longitudinally of said chamber (100).

3. An apparatus as claimed in claim 2 wherein said nozzles (210) are formed in a part cylindrical array in said chamber (100) said array angularly movable about the longitudinal axis of said chamber (100) thereby to enable said array to be positioned at any preferred angular position within said chamber.

4. An apparatus as claimed in claim 3 wherein said nozzles (210) are formed in an array of pipes (206) extending along said chamber (100) and wherein at least some of said pipes (206) are rotatable about their longitudinal axes and have means (208) for breaking up said waste.

5. An apparatus as claimed in any preceding claim further comprising means movable within said chamber for breaking up said waste.

6. An apparatus as claimed in any preceding claim wherein said extraction means (102) extends longitudinally of said chamber (100) for extracting said gas along at least a portion of the length of said chamber, and said extraction means (102) comprises an elongate pipe (104, 120) having a plurality of openings (106, 122, 116) for passage of said gas into said pipe (102).

7. An apparatus as claimed in any preceding claim wherein said chamber (100) has gate means (308) movable between a first position for inhibiting movement of waste from said first zone (200) into said second zone (300), and a second position allowing free movement of said waste from said first zone into said second zone.

8. An apparatus as claimed in any preceding claim comprising pipe means (102) extending coaxially of said chamber and having a plurality of through-holes for passage of said gas into said pipe means and wherein said pipe means (102) has:
first conduit means (104) extending along said first zone (200) and having a plurality of said through-holes (106) arranged for extraction of said air and/or moisture along said first zone;
and second conduit means (120) extending along said second zone (200) and having a plurality of said through-holes (122) arranged for extraction of said syngas along said second zone.

9. An apparatus as claimed in claim 8 wherein said through-holes (106, 122) are arranged for uniform extraction of said air and/or moisture along said first zone (200) and said syngas along said second zone (300).

10. An apparatus as claimed in any of the preceding claims having an extraction zone (500) downstream of said processing zone (200, 300) for extraction of processed solids from said processing zone and wherein said apparatus has gate means (408) movable between a first position for inhibiting movement of waste from said processing zone (200, 300) into said extraction zone (500), and a second position allowing free movement of said waste from said processing zone into said extraction zone.

11. An apparatus as claimed in claim 10 wherein said extraction zone (500) comprises a receptacle (502) having a plurality of through-holes (507) for allowing extraction of dust and small particulate material from said extraction zone.

12. An apparatus as claimed in claim 11 wherein said extraction means (102) further comprises assist means (112, 116) for conducting a portion of said extracted gases into said extraction zone (500) for assisting extraction of said dust and small particulate material from said extraction zone and wherein said assist means comprises an elongate pipe (112) having a plurality of openings (116) for passage of said gas into said extraction zone (504).

13. A method of processing waste material including organic waste and MSW comprising:
introducing said waste material into a processing zone (200, 300);
introducing hot gasses into said zone at a radially outer region of said zone;
removing processed solids from said zone;
and extracting gas from a central region of said zone;
**characterised in that**:
said processing zone (200, 300) has a first zone (200) for extracting air and/or moisture from said waste and a second zone (300) downstream of said first zone for extraction of syngas;
and the method further comprises extracting said air and/or moisture separately from said syngas.

14. A method as claimed in claim 13 comprising introducing said hot gasses into said zone (200, 300) through at least one array of nozzles (210) arranged longitudinally of said zone.

15. A method as claimed in claim 14 wherein said nozzles (210) are formed in a part cylindrical array in said zone, the method further comprising angularly moving said array about the longitudinal axis of said zone (100) thereby to enable said array to be positioned at any preferred angular position within said zone

16. A method as claimed in any of claims 13 to 15 wherein said nozzles (210) are formed in an array of pipes (206) extending along said zone (200, 300), the method further comprising rotating at least some of said pipes (206) about their longitudinal axes.

17. A method as claimed in any of claims 13 to 16 comprising extracting said gas along at least a portion of the length of said zone.

18. A method as claimed in claim 13 further comprising controlling movement of waste from said first zone (200) into said second zone (300).

## Patentansprüche

1. Vorrichtung (10) für die Verarbeitung von Abfallmaterial, einschließlich organischen Abfalls und kommunalen Festabfalls, die aufweist:
eine längliche Verarbeitungskammer (100) mit einer Verarbeitungszone (200, 300) für das Verarbeiten von Abfall bei einer erhöhten Temperatur;
wobei die Verarbeitungskammer (100) aufweist:
einen Eintritt (110) für das Einführen des Abfallmaterials;
einen Austritt (504) für das Entfernen der verarbeiteten Feststoffe;
ein erstes Mittel (206, 306) für das Einführen von heißen Gasen in die Kammer (100) in einem radial äußeren Bereich der Kammer;
und ein Extraktionsmittel (102) für das Extrahieren von Gas aus einem mittleren Bereich der Kammer (100); **dadurch gekennzeichnet, dass**
die Verarbeitungskammer (100) eine erste Zone (200) für das Extrahieren von Luft und/oder Feuchtigkeit aus dem Abfall und eine zweite Zone (300) stromabwärts von der ersten Zone für das Extrahieren von Synthesegas aufweist; und dass
das Extraktionsmittel (102) ausgebildet ist, um die Luft und/oder die Feuchtigkeit separat vom Synthesegas zu extrahieren.

2. Vorrichtung nach Anspruch 1, bei der das erste Mittel mindestens eine Anordnung von Düsen (210) aufweist, die in Längsrichtung der Kammer (100) angeordnet sind.

3. Vorrichtung nach Anspruch 2, bei der die Düsen (210) in einer teilzylindrischen Anordnung in der Kammer (100) ausgebildet sind, wobei die Anordnung um die Längsachse der Kammer (100) winkelig beweglich ist, um dadurch zu ermöglichen, dass die Anordnung unter einer bevorzugten Winkelposition innerhalb der Kammer positioniert wird.

4. Vorrichtung nach Anspruch 3, bei der die Düsen (210) in einer Anordnung von Rohren (206) ausgebildet sind, die sich entlang der Kammer (100) erstrecken, und wobei mindestens einige der Rohre (206) um ihre Längsachsen drehbar sind und ein Mittel (208) für das Zersetzen des Abfalls aufweisen.

5. Vorrichtung nach einem der vorhergehenden Ansprüche, die außerdem ein Mittel aufweist, das innerhalb der Kammer für das Zersetzen des Abfalls beweglich ist.

6. Vorrichtung nach einem der vorhergehenden Ansprüche, bei der sich das Extraktionsmittel (102) in Längsrichtung der Kammer (100) für das Extrahieren des Gases längs mindestens eines Abschnittes der Länge der Kammer erstreckt, und wobei das Extraktionsmittel (102) ein längliches Rohr (104, 120) mit einer Vielzahl von Öffnungen (106, 122, 116) für den Durchgang des Gases in das Rohr (102) aufweist.

7. Vorrichtung nach einem der vorhergehenden Ansprüche, bei der die Kammer (100) ein Klappenmittel (308) aufweist, das zwischen einer ersten Position für das Verhindern der Bewegung des Abfalls aus der ersten Zone (200) in die zweite Zone (300) und einer zweiten Position beweglich ist, die die ungehinderte Bewegung des Abfalls aus der ersten Zone in die zweite Zone gestattet.

8. Vorrichtung nach einem der vorhergehenden Ansprüche, die ein Rohrmittel (102) aufweist, das sich koaxial zur Kammer erstreckt und eine Vielzahl von Durchgangslöchern für den Durchgang des Gases in das Rohrmittel aufweist, und wobei das Rohrmittel (102) aufweist:
ein erstes Leitungsmittel (104), das sich entlang der ersten Zone (200) erstreckt und eine Vielzahl von Durchgangslöchern (106) aufweist, die für die Extrahierung der Luft und/oder der Feuchtigkeit entlang der ersten Zone angeordnet sind;
und ein zweites Leitungsmittel (120), das sich entlang der zweiten Zone (300) erstreckt und eine Vielzahl von Durchgangslöchern (122) aufweist, die für die Extrahierung des Synthesegases entlang der zweite Zone angeordnet sind.

9. Vorrichtung nach Anspruch 8, bei der die Durchgangslöcher (106, 122) für eine gleichmäßige Extrahierung der Luft und/oder der Feuchtigkeit entlang der ersten Zone (200) und des Synthesegases entlang der zweiten Zone (300) angeordnet sind.

10. Vorrichtung nach einem der vorhergehenden Ansprüche, die eine Extrahierungszone (500) stromabwärts von der Verarbeitungszone (200, 300) für die Extrahierung der verarbeiteten Feststoffe aus der Verarbeitungszone aufweist, und wobei die Vorrichtung ein Klappenmittel (408) aufweist, das zwischen einer ersten Position für das Verhindern der Bewegung des Abfalls aus der Verarbeitungszone (200, 300) in die Extrahierungszone (500) und einer zweiten Position beweglich ist, die die ungehinderte Bewegung des Abfalls aus der Verarbeitungszone in die Extrahierungszone gestattet.

11. Vorrichtung nach Anspruch 10, bei der die Extrahierungszone (500) eine Aufnahmevorrichtung (502) mit einer Vielzahl von Durchgangslöchern (507) aufweist, um die Extrahierung von Staub und kleinen Feststoffteilchen aus der Extrahierungszone zu gestatten.

12. Vorrichtung nach Anspruch 12, bei der das Extraktionsmittel (102) außerdem ein Hilfsmittel (112, 116) für das Leiten eines Teils der extrahierten Gase in die Extrahierungszone (500) aufweist, um die Extrahierung von Staub und kleinen Feststoffteilchen aus der Extrahierungszone zu unterstützen, und wobei das Hilfsmittel ein längliches Rohr (112) mit einer Vielzahl von Öffnungen (116) für den Durchgang des Gases in die Extrahierungszone (504) aufweist.

13. Verfahren zur Verarbeitung von Abfallmaterial, einschließlich organischen Abfalls und kommunalen Festabfalls, das die folgenden Schritte aufweist:
Einführen des Abfallmaterials in eine Verarbeitungszone (200, 300);
Einführen von heißen Gasen in die Zone in einem radial äußeren Bereich der Zone;
Entfernen der verarbeiteten Feststoffe aus der Zone;
und Extrahieren des Gases aus einem mittleren Bereich der Zone;
**dadurch gekennzeichnet, dass**:
die Verarbeitungszone (200, 300) eine erste Zone (200) für das Extrahieren von Luft und/oder Feuchtigkeit aus dem Abfall und eine zweite Zone (300) stromabwärts von der ersten Zone für das Extrahieren von Synthesegas aufweist;
und dass das Verfahren außerdem den Schritt des Extrahierens von der Luft und/oder der Feuchtigkeit separat vom Synthesegas aufweist.

14. Verfahren nach Anspruch 13, das den Schritt des Einführens der heißen Gase in die Zone (200, 300) durch mindestens eine Anordnung von Düsen (210) aufweist, die in Längsrichtung der Zone angeordnet sind.

15. Verfahren nach Anspruch 14, bei dem die Düsen (210) in einer teilzylindrischen Anordnung in der Zone ausgebildet sind, wobei das Verfahren außerdem den Schritt des winkeligen Bewegens der Anordnung um die Längsachse der Zone (100) aufweist, um dadurch zu ermöglichen, dass die Anordnung unter einer bevorzugten Winkelposition innerhalb der Zone positioniert wird.

16. Verfahren nach einem der Ansprüche 13 bis 15, bei dem die Düsen (210) in einer Anordnung von Rohren (206) ausgebildet sind, die sich entlang der Zone (200, 300) erstrecken, wobei das Verfahren außerdem den Schritt des Drehens von mindestens einigen der Rohre (206) um ihre Längsachsen aufweist.

17. Verfahren nach einem der Ansprüche 13 bis 16, das den Schritt des Extrahierens des Gases entlang mindestens eines Abschnittes der Länge der Zone aufweist.

18. Verfahren nach Anspruch 13, das außerdem den Schritt des Steuerns der Bewegung des Abfalls aus der ersten Zone (200) in die zweite Zone (300) aufweist.

## Revendications

1. Appareil (10) pour traiter des déchets, englobant des déchets organiques et des déchets urbains, comprenant :
une chambre de traitement allongée (100), comportant une zone de traitement (200, 300) pour traiter les déchets en présence d'une température élevée ;
la chambre de traitement (100) comportant :
une entrée (110) pour introduire lesdits déchets ;
une sortie (504) pour retirer les solides traités ;
un premier moyen (206, 306) pour introduire des gaz chauds dans ladite chambre (100), au niveau d'une région radialement externe de ladite chambre ;
et un moyen d'extraction (102) pour extraire le gaz d'une région centrale de ladite chambre (100) ; **caractérisé en ce que**
ladite chambre de traitement (100) comporte une première zone (200) pur extraire l'air et/ou l'humidité desdits déchets, et une deuxième zone (300), en aval de ladite première zone, pour extraire le gaz de synthèse ; et **en ce que**
le moyen d'extraction (102) est adapté pour extraire ledit air et/ou ladite humidité de manière séparée dudit gaz de synthèse.

2. Appareil selon la revendication 1, dans lequel ledit premier moyen comprend au moins un agencement de buses (210), agencé de manière longitudinale par rapport à ladite chambre (100).

3. Appareil selon la revendication 2, dans lequel lesdites buses (210) sont formées dans un agencement en partie cylindrique dans ladite chambre (100), ledit agencement pouvant être déplacé angulairement autour de l'axe longitudinal de ladite chambre (100), pour permettre ainsi le positionnement dudit agencement au niveau d'une quelconque position angulaire préférée dans ladite chambre.

4. Appareil selon la revendication 3, dans lequel lesdites buses (210) sont formées dans un agencement de tuyaux (206) s'étendant le long de ladite chambre (100), au moins certains desdits tuyaux (206) pouvant tourner autour de leurs axes longitudinaux et comportant un moyen (208) pour désagréger lesdits déchets.

5. Appareil selon l'une quelconques des revendications précédentes, comprenant en outre un moyen pouvant se déplacer dans ladite chambre, pour désagréger lesdits déchets.

6. Appareil selon l'une quelconque des revendications précédentes, dans lequel ledit moyen d'extraction (102) s'étend longitudinalement par rapport à ladite chambre (100) pour extraire ledit gaz le long d'au moins une partie de la longueur de ladite chambre, ledit moyen d'extraction (102) comprenant un tuyau allongé (104, 120), comportant plusieurs ouvertures (106, 122, 116) pour permettre le passage dudit gaz dans ledit tuyau (102).

7. Appareil selon l'une quelconque des revendications précédentes, dans lequel ladite chambre (100) comporte un moyen de porte (308), pouvant se déplacer entre une première position, pour empêcher le déplacement des déchets de ladite première zone (200) dans ladite deuxième zone (300), et une deuxième position, permettant un déplacement libre desdits déchets de ladite première zone dans ladite deuxième zone.

8. Appareil selon l'une quelconque des revendications précédentes, comprenant un moyen de tuyau (102), s'étendant de manière coaxiale par rapport à ladite chambre, et comportant plusieurs trous de passage pour permettre le passage dudit gaz dans ledit moyen de tuyau, ledit moyen de tuyau (102) comportant :
un premier moyen de conduit (104), s'étendant le long de ladite première zone (200) et comportant plusieurs desdits trous de passage (106), agencés de sorte à permettre l'extraction dudit air et/ou de ladite humidité le long de ladite première zone;
et un deuxième moyen de conduit (120), s'étendant le long de ladite deuxième zone (200) et comportant plusieurs desdits trous de passage (122), agencés de sorte à permettre l'extraction dudit gaz de synthèse le long de ladite deuxième zone.

9. Appareil selon la revendication 8, dans lequel lesdits trous de passage (106, 122) sont agencés de sorte à permettre une extraction uniforme dudit air et/ou de ladite humidité le long de ladite première zone (200) et dudit gaz de synthèse le long de ladite deuxième zone (300).

10. Appareil selon l'une quelconque des revendications précédentes, comportant une zone d'extraction (500) en aval de ladite zone de traitement (200, 300), en vue de l'extraction des solides traités de ladite zone de traitement, ledit appareil comportant un moyen de porte (408), pouvant se déplacer entre une première position, pour empêcher le déplacement des déchets de ladite zone de traitement (200, 300) dans ladite zone d'extraction (500), et une deuxième position, permettant le déplacement libre desdits déchets de ladite zone de traitement dans ladite zone d'extraction.

11. Appareil selon la revendication 10, dans lequel ladite zone d'extraction (500) comprend un réceptacle (502), comportant plusieurs trous de passage (507), pour permettre l'extraction des poussières et de fines matières particulaires de ladite zone d'extraction.

12. Appareil selon la revendication 12, dans lequel ledit moyen d'extraction (102) comprend en outre un moyen d'assistance (112, 116) pour conduire une partie desdits gaz extraits dans ladite zone d'extraction (500), pour favoriser l'extraction desdites poussières et fines matières particulaires de ladite zone d'extraction, ledit moyen d'assistance comprenant un tuyau allongé (112) comportant plusieurs ouvertures (116) pour permettre le passage dudit gaz dans ladite zone d'extraction (504).

13. Procédé de traitement de déchets, englobant des déchets organiques et des déchets urbains, comprenant les étapes ci-dessous :
introduction desdits déchets dans une zone de traitement (200, 300) ;
introduction de gaz chauds dans ladite zone, au niveau d'une région radialement externe de ladite zone ;
retrait des solides traités de ladite zone ;
et extraction du gaz d'une région centrale de ladite zone ;
**caractérisé en ce que** :
ladite zone de traitement (200, 300) comporte une première zone (200) pour extraire l'air et/ou l'humidité desdits déchets, et une deuxième zone (300), en aval de ladite première zone, pour extraire le gaz de synthèse ;
et **en ce que** le procédé comprend en outre l'étape d'extraction dudit air et/ou de ladite humidité de manière séparée dudit gaz de synthèse.

14. Procédé selon la revendication 13, comprenant l'étape d'introduction desdits gaz chauds dans ladite zone (200, 300) à travers au moins un agencement de buses (210) agencé longitudinalement par rapport à ladite zone.

15. Procédé selon la revendication 14, dans lequel lesdites buses (210) sont formées dans un agencement en partie cylindrique dans ladite zone, le procédé comprenant en outre l'étape de déplacement angulaire dudit agencement autour de l'axe longitudinal de ladite zone (100), pour permettre ainsi le positionnement dudit agencement au niveau d'une quelconque position angulaire préférée dans ladite zone.

16. Procédé selon l'une quelconque des revendications 13 à 15, dans lequel lesdites buses (210) sont formées dans un agencement de tuyaux (206) s'étendant le long d ladite zone (200, 300), le procédé comprenant en outre l'étape de rotation d'au moins certains desdits tuyaux (206) autour de leurs axes longitudinaux.

17. Procédé selon l'une quelconque des revendications 13 à 16, comprenant l'étape d'extraction dudit gaz le long d'au moins une partie de la longueur de ladite zone.

18. Procédé selon la revendication 13, comprenant en outre l'étape de contrôle du déplacement des déchets de ladite première zone (200) dans ladite deuxième zone (300).
